# EUROPÄISCHE PATENTSCHRIFT

(11) **EP 0 566 009 B1**
(45) Veröffentlichungstag und Bekanntmachung des Hinweises auf die Patenterteilung: **13.03.1996**
(21) Anmeldenummer: 93105710.3
(22) Anmeldetag: 06.04.1993
(51) Int. Cl.: F16D 65/56

(54) **Druckluftbetätigte Scheibenbremse**
Air operated disc brake
Frein à disque actionné par air comprimé

(30) Priorität: 13.04.1992 DE 4212383
(43) Veröffentlichungstag der Anmeldung: 20.10.1993
(73) Patentinhaber: KNORR-BREMSE SYSTEME FÜR NUTZFAHRZEUGE GmbH, D-80809 München (DE)
(72) Erfinder: Hirschler, Klaus, W-8037 Neu-Esting (DE)
(74) Vertreter: KUHNEN, WACKER & PARTNER

(56) Entgegenhaltungen:
- EP-A- 0 436 906
- DE-A- 4 034 165
- GB-A- 2 225 070
- GB-A- 2 238 492

## Beschreibung

Die Erfindung bezieht sich auf eine druckluftbetätigte Scheibenbremse gemäß dem Oberbegriff des Anspruchs 1, die insbesondere für Straßenfahrzeuge und vorzugsweise für Nutzfahrzeuge vorgesehen ist.

Druckluftbetätigte bzw. pneumatische Scheibenbremsen der gattungsgemäßen Art sind beispielsweise aus der **DE**-**OS 37 16 202** sowie aus der nicht vorveröffentlichten **DE**-**OS 40 32 885** bekannt. Bei diesen bekannten Scheibenbremsen wird eine Bremsscheibe von einem in Axialrichtung verschiebbar gelagerten Bremssattel umfaßt, wobei auf einer Seite des Bremssattels eine druckluftbetätigte Zuspannvorrichtung angeordnet ist, bei deren Betätigung eine auf dieser Seite der Bremsscheibe befindliche Bremsbacke gegen diese gedrückt wird, worauf sich der Bremssattel aufgrund der Reaktionskräfte in Gegenrichtung verschiebt und dadurch eine auf der gegenüberliegenden Seite befindliche Bremsbacke gleichfalls an die Bremsscheibe andrückt.

Die Zuspannvorrichtung weist bei diesen bekannten Scheibenbremsen als Betätigungsorgan einen Drehhebel auf, der um eine zur Ebene der Bremsscheibe parallel verlaufende Drehachse schwenkbar gelagert ist. Der Drehhebel liegt hierbei auf seiner der Bremsscheibe zugewandten Seite mittels eines Exzenters etwa längsmittig an einer sich parallel zur Drehachse erstreckenden Traverse an, die bezüglich der Bremsscheibe verschiebbar geführt ist und in der mindestens eine ein Außengewinde aufweisende Stellspindel in einem jeweils zugeordneten Innengewinde der Traverse verstellbar verschraubt ist, wobei die Stellspindel über ein an ihrem bremsscheibenseitigen Ende sitzendes Druckstück auf die zuspannseitig im Bremssattel bezüglich der Bremsscheibe verschiebbar gelagerte Bremsbacke einwirkt. Ferner ist eine Nachstelleinrichtung vorgesehen, die drehfest mit der Stellspindel gekoppelt ist und bei jeder Betätigung des Drehhebels vermittels einer Rutschkupplung bewirkt, daß das sich infolge Belagverschleiß ändernde Lüftspiel seinen korrekten Sollwert konstant beibehält.

Dem Außengewinde der Stellspindel, bei dem es sich in der Regel um ein mehrgängiges Gewinde handelt, kommt in der Praxis eine für die Funktionssicherheit der Bremse große Bedeutung zu: Bei jeder Betätigung der Nachstelleinrichtung muß auf jeden Fall sichergestellt sein, daß das Gewinde mindestens so leichtgängig ist, daß die Rutschkupplung nicht vor der eigentlichen Nachstelldrehung der Stellspindel anspricht; andernfalls würde die Nachstellung versagen, worauf mit zunehmendem Verschleiß ein Ausfall der Bremse unausweichlich wäre. Um eine entsprechende Leichtgängigkeit in Zuspannrichtung sicherzustellen, wird das Gewinde daher gewöhnlich so stark geschmiert, daß eine Korrosion der Gewinde-Gleitflächen erschwert ist: aufgrund mangelnder Festigkeit und Schwierigkeiten bei der Herstellung ist die Verwendung von rostfreiem Edelstahl für die Stellspindel und die Traverse in der Praxis leider nicht möglich; vielmehr muß zur Herstellung der Stellspindel ein Fließpressverfahren herangezogen werden, bei dem veredelter Stahl nicht verwendbar ist. Das Auftreten von Korrosion kann daher langzeitlich nur bei regelmäßiger Schmierung verhindert werden, so daß die Wartungsarbeiten entsprechend sorgfältig durchzuführen sind. Darüber hinaus hat jeder Schmierstoff eine stark ausgeprägte Temperaturabhängigkeit, so daß insbesondere bei hohen Minusgraden ggf. keine Nachstellung mehr möglich ist.

Im zugespannten Zustand der Bremse, d.h. wenn die Stellspindel beim Bremsvorgang die Bremsbacke über das Druckstück gegen die Bremsscheibe drückt, muß demgegenüber verhindert werden, daß sich die Stellspindel infolge der ausgeübten Druckkräfte entgegen der Zuspannrichtung bewegt und die Bremsbacke wieder freigibt. Das Gewinde ist aus diesem Grund als selbstsperrendes Gewinde ausgelegt, und zwar durch entsprechende Wahl einer solchen Gewindesteigung, daß bei Druckbeaufschlagung die Haftreibungskräfte der Gewinde-Gleitflächen nicht überschritten werden. Gleichwohl kann eine zu starke Schmierung des Gewindes dazu führen, daß die Haftreibungskräfte so stark herabgesetzt werden, daß die Selbsthemmung hierdurch beeinträchtig wird; dies kann zu einer Verringerung der Bremsleistung oder zu völligem Bremsversagen führen. Die Schmierung des Gewindes muß daher in einer genauen Dosierung derart erfolgen, daß einerseits das kontinuierliche Nachstellen gewährleistet ist und andererseits kein Verlust der Selbsthemmung auftritt.

Der Erfindung liegt die Aufgabe zugrunde, eine druckluftbetätigte Scheibenbremse gemäß dem Oberbegriff des Anspruchs 1 derart weiterzubilden, daß eine erhöhte Zuverlässigkeit und eine wesentlich verbesserte Wartungsfreundlichkeit erzielbar sind.

Diese Aufgabe wird erfindungsgemäß mit der im Kennzeichnungsteil des Anspruchs 1 angegebene Maßnahmen gelöst.

Erfindungsgemäß ist demzufolge mindestens das Außengewinde der Stellspindel mit einer Gleitlackbeschichtung versehen. Es wurde überraschend gefunden, daß hierdurch ein konstant gleichbleibender Reibbeiwert der Gewinde-Gleitflächen erzielbar ist, der in der Größenordnung von 0.15 bis 0.2 liegt und darüber hinaus sehr leicht so eingestellt werden kann, daß einerseits eine leichtgängige Nachstellung und andererseits eine ausreichend große Selbsthemmung des Gewindes gewährleistet ist. Da der gewünschte Reibbeiwert durch hervorragenden Schutz vor Jeglicher Korrosion mittels des Gleitlacks zudem langzeitlich stabil bleibt, ist die Funktionssicherheit der Scheibenbremse erfindungsgemäß wesentlich erhöht.

Es hat sich ferner herausgestellt, daß eine geeignete Wahl und Schichtdicke des Gleitlacks gemäß der im Anspruch 2 angegebenen Weiterbildung der Erfindung das Aufbringen von zusätzlichem Schmiermittel überflüssig werden läßt. Nicht nur werden hierdurch die eingangs genannten, durch eventuelle Überdosierung auftretenden Probleme sicher vermieden, sondern es wird darüber hinaus auch die wartungsfreundlichkeit entscheidend verbessert. Weiterhin können durch den Verzicht auf Schmiermittel keine Fremdkörper im Gewinde hängenbleiben, so auch insoweit eine verbesserte Funktionssicherheit erzielt wird. Schließlich weist die Lagerung hierdurch keinerlei Temperaturabhängigkeit auf.

Vorteilhafte Zusammensetzungen des Gleilacks, die sich nach ausführlichen Untersuchungen als besonders günstig erwiesen haben, sind in den Ansprüchen 4 bis 7 angegeben.

Die Erfindung wird nachstehend anhand der Beschreibung von Ausführungsbeispielen unter Bezugnahme auf die Zeichnung näher erläutert. Es zeigen:
**Fig. 1** anhand eines Querschnitts den schematischen Aufbau der Zuspannvorrichtung;
**Fig. 2** einen Längsschnitt der in Fig. 1 gezeigten Zuspannvorrichtung; und
**Fig. 3** eine Ausführungsform der Stellspindel.

Um die der Erfindung zugrundeliegende Problematik zu verdeutlichen, sollen zunächst der prinzipielle Aufbau und die Wirkungsweise der gattungsgemäßen Scheibenbremse und deren Zuspannvorrichtung näher erläutert werden. Obgleich die gezeigte Ausführungsform der Zuspannvorrichtung zwei Spindeln aufweist, sei darauf hingewiesen, daß die Erfindung selbstverständlich auch bei einer einspindeligen Zuspannvorrichtung verwendbar ist.

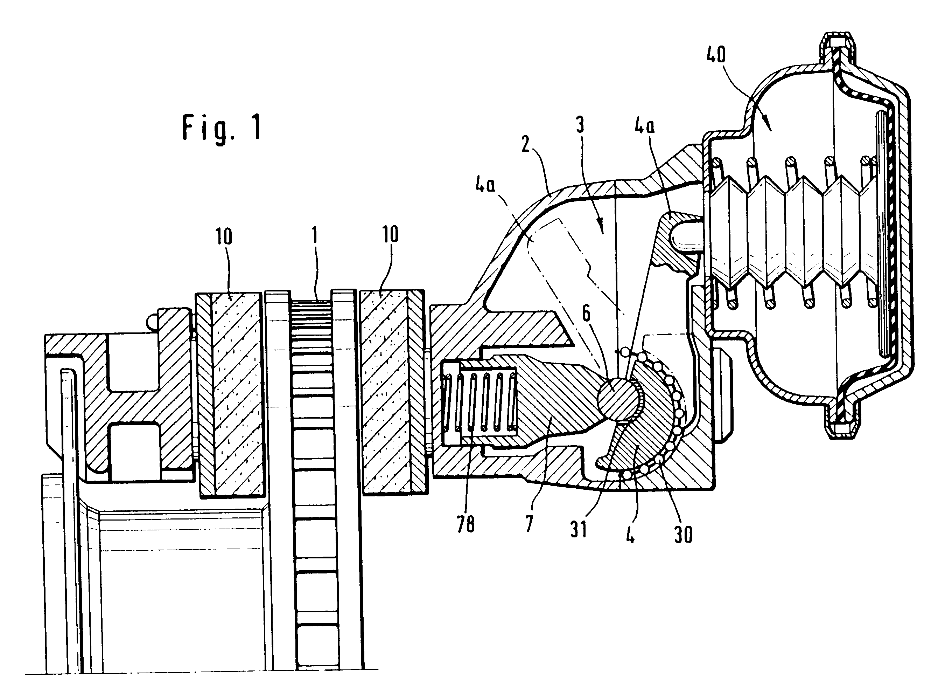

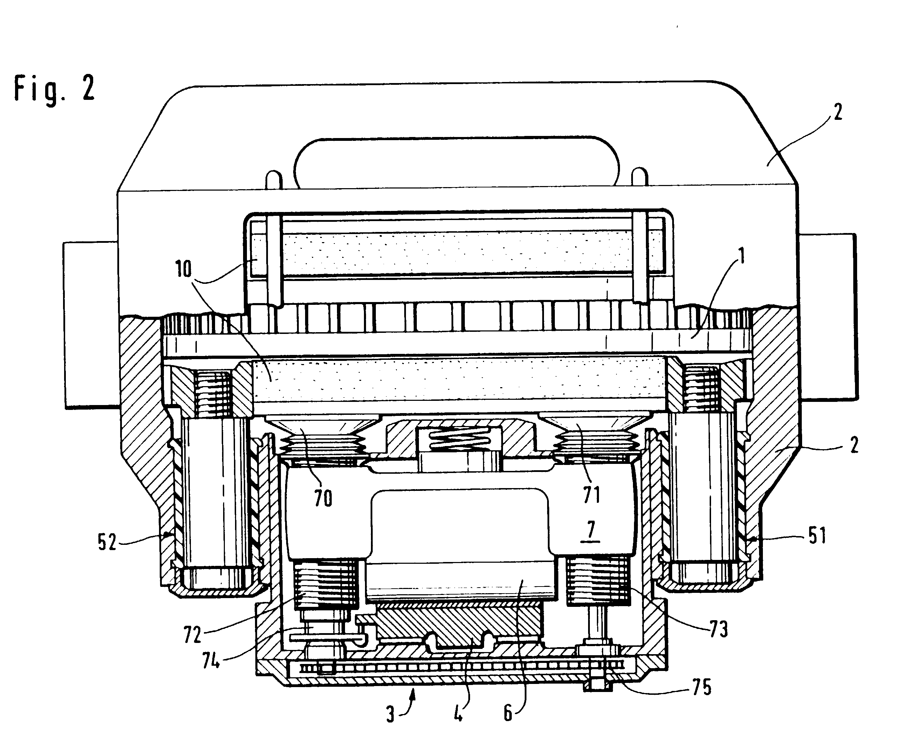

Wie aus den Figuren 1 und 2 zu erkennen ist, wird eine (innenbelüftete) Bremsscheibe 1, die an einer nicht näher bezeichneten Achse eines Nutzfahrzeugs befestigt ist, von einem Bremssattel 2 umfaßt. Der Bremssattel 2 ist gemäß Fig. 2 mittels eines starren Führungslagers 52 sowie mittels eines Ausgleichslagers 51 in axialer Verschiebbarkeit bezüglich der Bremsscheibe 1 am Fahrzeug gelagert. Im übrigen sind Aufbau und Funktion des Bremssattels bekannt, so daß sich eine nähere Erläuterung erübrigt.

Auf der in Fig. 1 rechten bzw. der in Fig. 2 unteren Seite der Bremsscheibe 1 ist eine schematisch mit dem Bezugszeichen 3 bezeichnete (zweispindelige) Zuspannvorrichtung angeordnet. Im Bremssattel 2 ist ein im wesentlichen halbkreisförmiges Drehlager 30 vorgesehen, dessen Drehachse parallel zur Ebene der Bremsscheibe 1 verläuft und das den entsprechend abgerundeten Bereich eines Drehhebels 4 aufnimmt, so daß der Drehhebel 4 parallel zur Ebene der Bremsscheibe 1 verschwenkt werden kann. Zur Betätigung des Drehhebels 4 ist ein lediglich schematisch dargestellter Bremszylinder 40 vorgesehen, der mit einem Kolben in eine geeignet geformte Ausnehmung eines Betätigungsarms 4a des Drehhebels 4 eingreift. Wenn der Bremszylinder 40 mit der Druckluft beaufschlagt wird, wird der Betätigungsarm 4a des Drehhebels 4 folglich von seiner Ruheposition in die in Fig. 1 in gestrichelter Darstellung angedeutete Position bewegt. Es sei angemerkt, daß die Betätigung des Drehhebels 4 selbstverständlich auch über ein Bremsgestänge erfolgen kann, so daß der Bremszylinder 40 gegebenenfalls an einem anderen Ort plaziert werden kann, falls der Einbauraum für die Scheibenbremse bzw. deren Zuspannvorrichtung begrenzt ist.

Die dem halbschalenförmigen Drehlager 30 abgewandte Seite des Drehhebels 4 ist über einen als Nocken dienenden Exzenter 6 mit einer Traverse 7 gekoppelt, die sich innerhalb des Bremssattels 2 im wesentlichen parallel zur Drehachse der Bremsscheibe 1 erstreckt und in dieser Ebene verschiebbar gelagert ist. An ihrem der Bremsscheibe 1 zugewandten Ende weist die Traverse 7 eine sacklochartige Ausnehmung auf, die von einem in Richtung zur Bremsscheibe 1 auskragenden, rohrartigen Ansatz umgeben ist. Dieser Ansatz der Traverse 7 ist in einer entsprechenden Ausnehmung des Bremssattels 2 rechtwinklig zur Ebene der Bremsscheibe 1 unter Beibehaltung eines derartigen Spiels schiebegelagert, daß die Traverse 7 geringfügige Schwenkbewegungen in der Zeichnungsebene ausführen kann. Innerhalb der Ausnehmung ist eine Spiralfeder 78 angeordnet, die zwischen die Traverse 7 und das der Bremsscheibe 1 zugewandte Ende des Bremssattels 2 eingespannt ist und dadurch die Traverse 7 zum Drehhebel 4 hin vorspannt.

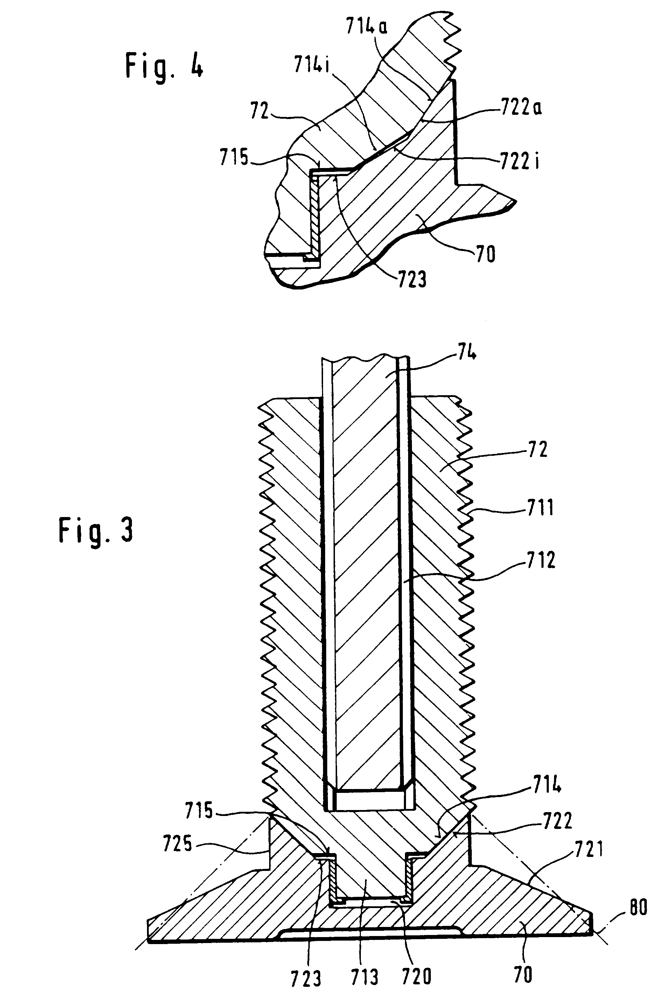

Wie insbesondere dem Längsschnitt der Fig. 2 entnehmbar ist, weist die Traverse 7 an beiden Seiten jeweils eine mit einem Innengewinde versehene Bohrung auf, in der jeweils eine Stellspindel 72 bzw. 73 justierbar verschraubt ist, deren in Fig.3 mit 711 bezeichnetes Außengewinde in einem entsprechend geformten Innengewinde der Traverse 7 geführt ist. An dem der Bremsscheibe 1 zugewandten Ende jeder der Stellspindeln 72 und 73 ist ein sich kegelförmig verbreiterndes Druckstück 70 bzw. 71 befestigt. Da sich die beiden Stellspindeln 72 und 73 infolge ihrer Anordnung in der Traverse 7 senkrecht zur Ebene der Bremsscheibe 1 erstrecken, liegen die Druckstücke 70 und 71 mit ihren flachen Enden an einer Bremsbacke 10 an. Die Bremsbacke 10 ist insbesondere in Umfangsrichtung zur Bremsscheibe 1 über nicht gezeigte Halterungen quer zur Bremsscheibe 1 verschiebbar geführt, wobei die Halterungen entweder dem Bremssattel 2 oder einem Bremsträger zugeordnet sein können.

Im Inneren der Stellspindel 72 ist eine Nachstelleinrichtung 74 angeordnet, die infolge einer Axialverzahnung drehfest mit der Stellspindel 72 gekoppelt und in axialer Richtung verschiebbar ist. Die Nachstelleinrichtung 74 wird bei jeder Betätigung des Drehhebels 4 um einen bestimmten Winkelbetrag gedreht, wodurch ein kontinuierliches Nachstellen der Bremse gewährleistet ist. In eine entsprechende Axialverzahnung der gegenüberliegenden Stellspindel 73 greift ein Zahnrad ein, das über eine Welle mit einer Synchronisationseinrichtung 75 gekoppelt ist, die das innenliegende Zahnrad und damit die Spindel 73 synchron mit der Nachstelleinrichtung 74 dreht. Hierdurch wird erreicht, daß das Druckstück 71 synchron mit dem Druckstück 70 nachgestellt wird.

Bei einer einspindeligen Ausführungsform der Traverse 7, die demzufolge lediglich eine einzige Stellspindel und damit nur ein Druckstück aufweist, wird die Stellspindel beispielsweise in der Mitte der Traverse 7 angeordnet, während der Exzenter 6 sowie die die Druckfeder aufweisende Lagerung der Traverse 7 jeweils in zweifacher Ausfertigung auf beiden Seiten der zentralen Stellspindel vorgesehen sind.

Nachfolgend wird das Arbeitsprinzip der erfindungsgemäßen Zuspanneinrichtung kurz erläutert. Bei Druckluftbeaufschlagung des Bremszylinders 40 wird der Betätigungsarm 4a gemäß Fig. 1 nach links verschwenkt, wodurch der am Drehhebel 4 wirkende Exzenter 6 um eine entsprechend den Hebelgesetzen verringerte Strecke gleichfalls nach links verschoben wird. Die Traverse 7 wird daher entgegen der Vorspannkraft der Spiralfeder 78 um diese Wegstrecke zur Bremsscheibe 1 hin gedrückt. Die an der Traverse 7 über die Stellspindeln 72 und 73 befestigten Druckstücke 70 bzw. 71 drücken folglich unter Überwindung des Lüftspiels (das in der Praxis ca. 0,4 mm beträgt) die Bremsbacke 10 gegen die Bremsscheibe 1. Wenn der Betätigungsarm 4a weiter nach links verschwenkt wird, verschiebt sich der Bremssattel aufgrund der auf die Bremsscheibe 1 ausgeübten Kraft in Fig. 1 nach rechts, so daß schließlich auch die linke Bremsbacke 10 gegen die Bremsscheibe 1 gepreßt wird. Da das Außengewinde der Stellspindeln 72 und 74 und das Jeweils zugeordnete Innengewinde der Traverse 7 so dimensioniert sind, daß im druckbeaufschlagten Zustand entgegen der Zuspannrichtung eine Selbsthemmung auftritt, können sich die Stellspindeln nicht in diese Richtung wegbewegen, so daß der Bremsdruck solange aufrechterhalten bleibt, bis der Drehhebel 4 freigegeben wird.

Wenn die beiden Bremsbacken 10 im Verlauf des vorstehend erläuterten Zuspannvorgangs um eine vorbestimmte, einem Soll-Lüftspiel entsprechende Strecke verschoben worden sind, wird die Nachstelleinrichtung 74 vom Drehhebel 4 betätigt. Sofern das Lüftspiel korrekt eingestellt ist, liegen beide Bremsbacken 10 zu diesem Zeitpunkt an der Bremsscheibe 1 an. Infolgedessen spricht eine in der Nachstelleinrichtung 74 vorgesehene Rutschkupplung an, so daß die Stellspindel 72 und die mit ihr synchronisierte Stellspindel 73 nicht verstellt werden. Wenn demgegenüber ein zu großes Lüftspiel vorliegt, was beispielsweise nach einem Belagwechsel oder bei zunehmendem Verschleiß der Bremsbacken der Fall ist, werden die Stellspindeln 72 und 73 von der Nachstelleinrichtung 74 um eine bestimmte Strecke gedreht und bringen dadurch das Lüftspiel, gegebenenfalls nach mehrmaliger Betätigung der Bremse, auf den Sollwert. Auf diese Weise ist gewährleistet, daß die erfindungsgemäße Scheibenbremse bis zum vollständigen Abrieb der Bremsbacken 10 funktionsfähig bleibt; dies ist jedoch, wie eingangs erläutert, nur dann der Fall, wenn der Gleitreibungsbeiwert des Gewindes so gering ist, daß die Rutschkupplung nicht zuvor anspricht.

Die Fig.3 zeigt eine Ausführungsform der Stellspindel 72, an der das Druckstück 70 über konusförmige Stützflächen 714 bzw. 722 und einen Zapfen 713 lösbar gekoppelt ist, da der Zapfen 713 unter Zwischenschaltung einer federförmigen Klemmeinrichtung, die in der Figur lediglich schematisch angedeutet ist, in eine zugeordnete Ausnehmung 720 des Druckstücks 70 eingreift.

Das Außengewinde 711 der Stellspindel ist erfindungsgemäß mit einem Gleitlack beschichtet, der vorzugsweise in einer Schichtdicke von 10 bis 30 Mikrometer aufgebracht wird. Untersuchungen haben gezeigt, daß vorteilhaft ein Gleitlack verwendet werden kann, der aus einer Mischung von Festschmierstoffen, organischem Binder und Lösungsmitteln besteht. Insbesondere ist es günstig, einen Gleitlack mit ca. 50 % Feststoffanteilen zu verwenden. Der Festschmierstoff des Gleitlacks enthält vorzugsweise Molybdänsulfid; ggf. kann alternativ oder zusätzlich hierzu auch die Verwendung von Graphit in Erwägung gezogen werden. Ausführliche Untersuchungen haben ergeben, daß besonders vorteilhafte Ergebnisse mit einem Gleitlack erzielbar sind, der (im August 1991) unter der Handelsbezeichnung "Molykote 3400 A" von der Firma Dow Corning erhältlich war.

Mit der Gleitlackbeschichtung wird erreicht, daß das Außengewinde korrosionsgeschützt ist und das Auftreten von "Passungsrost" sicher vermieden werden kann. Darüber hinaus kann hierdurch der Reibbeiwert des Gewindes auf einen gleichmäßigen und konstanten Wert eingestellt werden, was sowohl im Hinblick auf die Nachstellung als auch für die Selbsthemmung des Gewindes von Bedeutung ist. Zudem kann auf eine zusätzliche Schmierung ggf. verzichtet werden.

Das jeweilige Innengewinde der Traverse 7, in dem die betreffende Stellspindel gelagert ist, wird vorzugsweise phosphatiert und anschließend wachsölgetränkt; Untersuchungen haben gezeigt, daß auf diese Weise ausreichend gute und gleichbleibende Reibbeiwerte erzielbar sind. Falls der erhöhte Fertigungsaufwand dem nicht entgegensteht, kann jedoch auch in Erwägung gezogen werden, für diese Innengewinde ebenfalls eine Gleitlackbeschichtung zu verwenden. Dieser kann die gleiche Zusammenstzung wie der Gleitlack des Außengewindes der Stellspindeln haben.

## Patentansprüche

1. Druckluftbetätigte Scheibenbremse mit einem eine Bremsscheibe *(1)* umfassenden Bremssattel *(2)*, auf dessen einer Seite eine Zuspannvorrichtung *(3)* mit einem schwenkbar gelagerten Drehhebel *(4, 4a)* angeordnet ist, der mittels eines Exzenters *(6)* an einer sich parallel zur Drehachse *(25)* erstreckenden Traverse *(7)* anliegt, die bezüglich der Bremsscheibe *(1)* verschiebbar geführt ist und in der mindestens eine mit einem Außengewinde *(711)* versehene Stellspindel *(72, 73)* verstellbar verschraubt ist, die über ein an ihrem bremsscheibenseitigen Ende sitzendes Druckstück *(70, 71)* auf eine zuspannseitig im Bremssattel *(2)* bezüglich der Bremsscheibe *(1)* verschiebbar gelagerte Bremsbacke *(10)* einwirkt, wobei eine mit der Stellspindel *(72, 73)* drehfest gekoppelte Nachstelleinrichtung *(74, 75)* das sich infolge Belagverschleiß ändernde Lüftspiel konstant hält,
***dadurch gekennzeichnet***, daß mindestens das Außengewinde *(711)* der Stellspindel *(72, 73)* eine Gleitlackbeschichtung aufweist.

2. Druckluftbetätigte Scheibenbremse nach Anspruch 1, ***dadurch gekennzeichnet***, daß die Stellspindel *(72, 73)* ohne zusätzliche Schmiermittel in der Traverse *(7)* verschraubt ist.

3. Druckluftbetätigte Scheibenbremse nach Anspruch 1 oder 2, ***dadurch gekennzeichnet***, daß der Gleitlack in einer Dicke von 10 bis 30 Mikrometer aufgebracht ist.

4. Druckluftbetätigte Scheibenbremse nach einem der Ansprüche 1 bis 3, ***dadurch gekennzeichnet***, daß der Gleitlack aus einer Mischung von Festschmierstoffen, organischem Binder und Lösungsmitteln besteht.

5. Druckluftbetätigte Scheibenbremse nach Anspruch 4, ***dadurch gekennzeichnet***, daß der Gleitlack ca. 50 % Feststoffanteile enthält.

6. Druckluftbetätigte Scheibenbremse nach Anspruch 4 oder 5, ***dadurch gekennzeichnet***, daß der Festschmierstoff des Gleitlacks Molybdänsulfid enthält.

7. Druckluftbetätigte Scheibenbremse nach Anspruch 4 oder 5, ***dadurch gekennzeichnet***, daß der Festschmierstoff des Gleitlacks Graphit enthält.

8. Druckluftbetätigte Scheibenbremse nach einem der Ansprüche 1 oder 3 bis 7, ***dadurch gekennzeichnet***, daß das jeweilige Innengewinde der Traverse *(7)* phosphatiert und wachsölgetränkt ist.

## Claims

1. Compressed-air actuated disk brake comprising a caliper *(2)* which reaches around a brake disk *(1)* and on one side of which an application device *(3)* is arranged which has a pivotally mounted pivoting lever *(4*, *4a)* which by means of an eccentric (6) rests against a traverse *(7)* which extends in parallel to the axis of rotation *(25)* and which is guided to be displaceable with respect to said brake disk *(1)* and has at least one actuating spindle *(72, 73)* comprising an external thread *(711)* screwed adjustably into it, said actuating spindle *(72, 73),* by way of a pressure member *(70, 71)* mounted on the end thereof facing said brake disk, acting upon a brake pad *(10)* which, on the application side, is disposed in said caliper *(2)* to be displaceable with respect to said brake disk *(1)*, an adjusting means *(74, 75)* coupled in a rotationally fixed manner to said actuating spindle *( 72, 73)* maintaining the clearance varying due to lining wear constant,
*characterized in that* at least said external thread *(711)* of said actuating spindle *(72, 73)* comprises a coating of antifriction lacquer.

2. Compressed-air actuated disk brake according to claim 1, *characterized in that* said actuating spindle *(72, 73)* is screw-connected in said traverse *(7)* without any additional lubricants.

3. Compressed-air actuated disk brake according to claim 1 or 2, *characterized in that* the antifriction lacquer is applied in a thickness of 10 to 30 micrometers.

4. Compressed-air actuated disk brake according to one of claims 1 to 3, *characterized in that* the antifriction lacquer is made up of a mixture of solid lubricants, organic binder and solvents.

5. Compressed-air actuated disk brake according to claim 4, *characterized in that* the antifriction lacquer contains approximately 50% solid matter.

6. Compressed-air actuated disk brake according to claim 4 or 5, *characterized in that* the solid lubricant of the antifriction lacquer contains molybdenum sulfide.

7. Compressed-air actuated disk brake according to claim 4 or 5, *characterized in that* the solid lubricant of the antifriction lacquer contains graphite.

8. Compressed-air actuated disk brake according to one of claims 1 or 3 to 7, *characterized in that* the respective internal thread of said traverse *(7)* is phosphatized and impregnated with wax oil.

## Revendications

1. Frein à disque actionné par air comprimé comportant un étrier de frein (2) cernant le disque de frein (1), sur un côté duquel un dispositif de serrage (3) avec un levier pivotant (4, 4a) est disposé de manière à pouvoir pivoter, qui moyennant un excentrique (6) repose contre une traverse (7) s'étendant parallèlement à l'axe de rotation (25), qui est guidée de manière à pouvoir se déplacer par rapport au disque de frein et dans laquelle au moins une vis de réglage (72, 73) présentant un filet extérieur (711) est vissée de manière à pouvoir être réglée, qui moyennant une pièce de pression (70, 71) logée à son extrémité côté disque de frein agit sur une mâchoire de frein (10) qui est logée côté serrage dans l'étrier de frein (2) et qui peut être déplacée par rapport au disque de frein (1), un dispositif de rattrapage (74, 75) qui est raccordé à la vis de réglage (72, 73) de manière à ne pas pouvoir pivoter maintenant constant le jeu qui change à la suite de l'usure des garnitures,
caractérisé en ce qu'au moins le filet extérieur (711) de la vis de réglage (72, 73) présente un enduit de vernis glissant.

2. Frein à disque actionné par air comprimé selon la revendication 1, caractérisé en ce que la vis de réglage (72, 73) est vissée sans lubrifiants supplémentaires dans la traverse (7).

3. Frein à disque actionné par air comprimé selon les revendications 1 ou 2, caractérisé en ce que le vernis de glissement est appliqué en une épaisseur de 10 à 30 micromètres.

4. Frein à disque actionné par air comprimé selon l'une quelconque des revendications 1 à 4, caractérisé en ce que le vernis de glissement consiste en un mélange de lubrifiants solides, d'un liant organique et de solvants.

5. Frein à disque actionné par air comprimé selon la revendication 4, caractérisé en ce que le vernis de glissement comporte environ 50 % de parts solides.

6. Frein à disque actionné par air comprimé selon les revendications 4 ou 5, caractérisé en ce que le lubrifiant solide du vernis de glissement contient du sulfure de molybdène.

7. Frein à disque actionné par air comprimé selon les revendications 4 ou 5, caractérisé en ce que le lubrifiant solide du vernis de glissement contient du graphite.

8. Frein à disque actionné par air comprimé selon l'une quelconque des revendications 1 ou 3 à 7, caractérisé en ce que le filet intérieur de la traverse (7) est phosphaté ou trempé dans l'huile de cire.
